# DEMANDE DE BREVET EUROPEEN

(11) **EP 2 977 286 A1**
(43) Date de publication de la demande: **27.01.2016**
(21) Numéro de dépôt: 15178210.9
(22) Date de dépôt: 24.07.2015
(51) Int. Cl.: B61B 12/00, B61B 12/06

(54) **EQUIPEMENT DE TRANSPORT PAR CÂBLE**

(30) Priorité: 24.07.2014 FR 1457173
(71) Demandeur: Altim, 74370 Argonay (FR); Picdi, 17000 La Rochelle (FR)
(72) Inventeur: DELMAS, Bruno, 74960 Cran Gevrier (FR); VAN PETEGHEM, Benjamin, 74960 Cran Gevrier (FR); DELILLE, Benoît, 74940 Annecy Le Vieux (FR); LE DEVENTEC, Gael, 17000 La Rochelle (FR); CAILBAULT, Jean-François, 86000 Poitiers (FR)
(74) Mandataire: Croonenbroek, Thomas Jakob

(57) **Abrégé**

La présente invention concerne un équipement de transport par câble (1) comprenant au moins un véhicule (3) configuré pour se déplacer sur un parcours reliant une gare de départ (7) et une gare d'arrivée (9), dans lequel au moins un véhicule (3) comprend une étiquette radio-fréquence à identifiant unique (4), dite étiquette RF de véhicule, configurée pour récupérer et sauvegarder des données issues d'au moins un capteur de mesure communicant (6) situé sur l'équipement de transport par câble (1), ledit capteur communicant (6) présentant une unité de mesure couplée à une étiquette radio-fréquence à identifiant unique, dite étiquette RF de capteur, et dans lequel au moins une gare (7, 9) comprend un lecteur radio-fréquence (19) configuré pour récupérer les données sauvegardées par la, au moins une, étiquette RF de véhicule (4).

## Description

La présente invention concerne un équipement de transport par câble comme par exemple une remontée mécanique.

Les équipements de transport par câble sont généralement soumis à un environnement changeant notamment certains paramètres comme le chargement ou les conditions climatiques de sorte qu'il peut être nécessaire de faire des mesures sur les différents éléments de l'équipement pour pouvoir mieux estimer leur vieillissement et éviter des accidents dus à des contraintes mécaniques trop importantes.

Cependant, ces équipements étant dans des environnements accidentés et froids, il peut être difficile de transmettre les mesures effectuées vers une base centrale pour effectuer le traitement de ces données. En effet, dans le cas d'une remontée mécanique de sports d'hiver, les mesures doivent généralement être faites en hauteur et dans des conditions climatiques difficiles de sorte qu'un relevé des données manuel apparaît extrêmement difficile. Par ailleurs, la transmission de données entre le capteur situé par exemple sur l'un des pylônes et la base centrale située par exemple à la gare de départ de la remontée mécanique peut également être compliquée du fait du terrain et des conditions climatiques qui limitent l'énergie disponible pour effectuer la transmission et peuvent empêcher les transmissions de données sans fil.

La présente invention vise donc à surmonter les obstacles précités de l'état de la technique et à proposer une solution permettant de transmettre de manière fiable des données entre différents éléments d'un équipement de transport par câble éloignés les uns des autres vers une base centrale de l'équipement quelles que soient la configuration de l'équipement de transport par câble et les conditions environnementales.

Ainsi, la présente invention concerne un équipement de transport par câble comprenant au moins un véhicule configuré pour se déplacer sur un parcours reliant une gare de départ, une gare d'arrivée et éventuellement une ou plusieurs gares intermédiaires, dans lequel au moins un véhicule comprend une étiquette radio-fréquence à identifiant unique, dite étiquette RF de véhicule, configurée pour récupérer et sauvegarder des données issues d'au moins un capteur de mesure communicant situé sur l'équipement de transport par câble, ledit capteur communicant présentant une unité de mesure couplée à une étiquette radio-fréquence à identifiant unique, dite étiquette RF de capteur, et dans lequel au moins une gare comprend un lecteur radio-fréquence configuré pour récupérer les données sauvegardées par la, au moins une, étiquette RF de véhicule.

Selon un autre aspect de la présente invention, le parcours comprend au moins un pylône, le, au moins un, capteur communicant est situé au niveau d'un pylône et la, au moins une, étiquette RF de véhicule est configurée pour être réveillée et alimentée par les vibrations engendrées au passage d'un pylône. L'étiquette RF de véhicule peut également être alimentée par pile, par la récupération et le stockage de l'énergie environnante, qui peut être, par exemple, de nature mécanique, électromagnétique ou thermique.

Selon un aspect additionnel de la présente invention, la, au moins une, étiquette RF de véhicule est configurée pour retourner dans un mode de veille après le passage d'un pylône par le véhicule.

Selon un aspect supplémentaire de la présente invention, une pluralité de véhicules comprend une étiquette RF de véhicule et ces étiquettes RF de véhicule sont configurées pour transmettre les données récupérées aux autres étiquettes RF de véhicule situées à portée, les données étant transmises d'une étiquette RF de véhicule à l'autre jusqu'à un lecteur radio-fréquences situé dans une gare.

Selon un autre aspect de la présente invention, les étiquettes RF de véhicules sont configurées pour récupérer et transmettre les données grâce à l'énergie provenant de pile électrique ou batterie ou de la récupération et le stockage de l'énergie environnante comme par exemple celle récupérée à partir des vibrations provoquées par le passage du véhicule au niveau du pylône.

Selon un autre aspect de la présente invention, les étiquettes RF de véhicules comprennent des moyens de stockage d'énergie.

Selon un aspect additionnel de la présente invention, le, au moins un, capteur communicant est configuré pour être réveillé par les vibrations engendrées par le passage d'un véhicule au niveau d'un pylône.

Selon un autre aspect de la présente invention, le, au moins un, capteur communicant est configuré pour être alimenté par une source d'énergie environnante.

Les modes de réalisation de la présente invention concernent également un procédé de récupération des mesures réalisées sur un équipement de transport par câble comprenant une pluralité de véhicules configurés pour se déplacer sur un parcours comprenant une pluralité de pylônes et reliant une gare de départ, une gare d'arrivée et éventuellement une ou plusieurs gares intermédiaires, au moins un véhicule comprenant une étiquette radio-fréquence à identifiant unique, dite étiquette RF de véhicule, ledit procédé comprenant les étapes suivantes :
- on réalise au moins une mesure avec un capteur de mesure communicant situé sur le parcours des véhicules, le capteur de mesure communicant comprenant une étiquette radio-fréquence à identifiant unique, dite étiquette RF de capteur,
- on récupère et on sauvegarde des données associées à la, au moins une, mesure au niveau d'une étiquette RF de véhicule lors du passage d'un véhicule à proximité du capteur communicant,
- on récupère les données associées à la, au moins une, mesure au niveau d'un lecteur radio-fréquence situé dans une gare via une étiquette RF de véhicule.

Selon un autre aspect de la présente invention, une pluralité de véhicules comprend une étiquette RF de véhicule et, après la première étape de récupération, on transmet les données associées à la, au moins une, mesure à d'autres étiquettes RF de véhicule situées à portée.

Selon un aspect additionnel de la présente invention, on transmet les données associées à la, au moins une, mesure d'une étiquette RF de véhicule à l'autre jusqu'à la récupération des dites données au niveau du lecteur radio-fréquence.

D'autres caractéristiques et avantages de la présente invention apparaîtront de la description qui va maintenant en être faite, en référence aux dessins annexés qui en représentent, à titre indicatif mais non limitatif des modes de réalisation possibles.

Sur ces dessins :
- la figure 1 représente un schéma d'un télésiège ;
- la figure 2 représente une vue de dessus et une vue de côté du balancier et des galets d'un pylône d'un télésiège ;
- les figures 3a à 3g représentent une vue de dessus d'un télésiège avec différentes positions de certains sièges ;

Sur ces figures, les éléments ayant une fonction identique portent les mêmes numéros de référence.

Le terme «RF» correspond à l'acronyme radio fréquence ;

Le terme « RFID » correspond à l'acronyme anglais radio-frequency identification et correspond à une identification par radio-fréquence, par exemple selon les normes ISO 18000-3 ou ISO 15693;

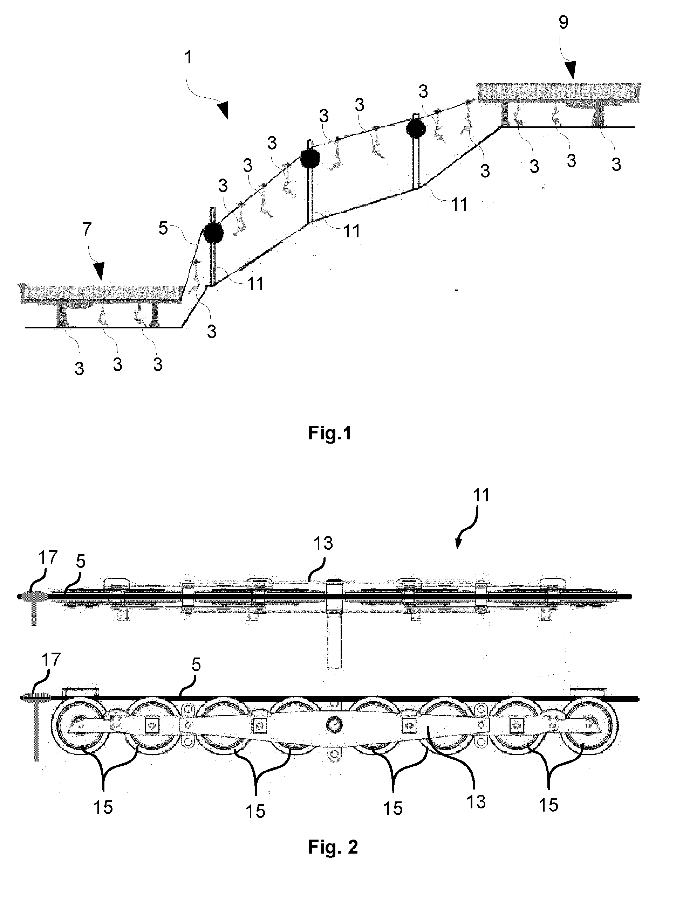

La présente invention concerne un équipement de transport par câble, par exemple une télécabine ou un télésiège. Comme représenté sur la figure 1, l'équipement de transport par câble 1, ici un télésiège, comprend une pluralité de véhicules 3, sièges dans le présent cas, suspendus à un câble 5 reliant une gare de départ 7 et une gare d'arrivée 9. Les véhicules 3 comprennent des moyens de communication radio-fréquences comme par exemple des étiquettes ou marqueurs ou « tags » RF par exemple de type RFID qui utilisent un spectre de fréquence compris entre 860 et 960 MHz. Des étiquettes RF couvrant d'autres bandes de fréquence comme la bande 433MHz ou la bande 2,5 GHz peuvent également être utilisées. Ces étiquettes RF sont actives, passives ou semi-passives. Dans le cas des étiquettes RF actives, une source d'énergie interne comme par exemple des piles électriques ou une batterie alimentent l'étiquette RF. Dans le cas d'étiquettes RF semi-passives, l'étiquette comprend un dispositif de récupération de l'énergie fournie par l'environnement. Cette énergie correspond par exemple à de l'énergie mécanique comme les vibrations engendrées par le passage au niveau d'un pylône ou à de l'énergie thermique récupérée par le biais d'éléments à effet Seebeck ou une énergie électromagnétique récupérée au niveau d'une antenne. Enfin dans le cas d'étiquettes RF passives, les étiquettes RF utilisent l'énergie fournie par les signaux électromagnétiques reçus d'un lecteur RF ou d'un autre élément actif envoyant un signal RF.

Dans le cas présent, ces étiquettes, dites étiquettes RF de véhicule, sont également équipées de systèmes de récupération d'énergie mécanique et de stockage d'énergie électrique, c'est à dire de système permettant de récupérer l'énergie de vibrations fournies à l'étiquette RF. De plus, ces étiquettes RF de véhicule peuvent également comprendre des systèmes photovoltaïques de récupération d'énergie lumineuse ou d'autres systèmes de récupération d'énergie. L'énergie récupérée pouvant être stockée dans des batteries, des condensateurs ou tout types d'éléments permettant un stockage d'énergie électrique.

Ainsi, ces étiquettes RF de véhicule peuvent être réveillées et alimentées par un signal RF émis par une antenne RF d'un lecteur situé généralement au niveau de la gare de départ 7 ou par un événement tel que des vibrations générées au niveau de l'équipement de transport par câble 1. En effet, l'équipement 1 comprend également une pluralité de pylônes intermédiaires 11 pour soutenir et/ou compresser le câble 5 portant les véhicules 3. Les pylônes 11 comprennent notamment une potence supportant un balancier 13 sur lequel sont positionnés des galets 15 comme représenté sur la figure 2 avec une vue de dessus et une vue de côté du balancier 13. Les galets 15 sont montés rotatifs et sont configurés pour recevoir et guider le câble 5. Les véhicules sont reliés au câble 1 par une fixation 17 qui entoure le câble 5 de sorte que le passage d'un véhicule au niveau d'un pylône 11 entraîne des vibrations liées au passage de la fixation 17 sur les galets 15. Ces vibrations sont donc utilisées pour « réveiller » l'étiquette RF 4 d'un véhicule 3, c'est-à-dire pour la faire passer d'un mode veille ou inerte à un mode actif. L'énergie des vibrations est également utilisée pour récupérer des données, par exemple des mesures effectuées par un capteur. Le capteur peut être un capteur interne à l'étiquette RF de véhicule 4, dans ce cas, l'énergie récupérée sert à effectuer les mesures ou un capteur externe situé sur le véhicule 3 ou sur le pylône 11 ou à proximité du pylône 11. Dans le cas d'un capteur externe, ce dernier est alors un capteur communicant 6 présentant une unité de mesure couplée avec des moyens de communication RF ou filaires, comme par exemple une étiquette RF dite étiquette RF de capteur, de sorte que l'étiquette RF 4 d'un véhicule peut récupérer les données associées aux mesures en envoyant un signal RF vers l'étiquette RF du capteur communicant 6. Les technologies utilisées pour les étiquettes RF de capteur correspondent aux technologies utilisées pour les étiquettes de véhicule présentées précédemment. Ainsi, un capteur communicant 6 peut comprendre un ou plusieurs capteurs reliés par un câble ou une communication sans fil, notamment RF, à une étiquette de capteur qui assure la liaison avec l'étiquette de véhicule. Le capteur communicant 6 peut être configuré pour effectuer des mesures à intervalles réguliers, dans ce cas, il aura une source d'énergie interne et transférera la ou les dernière(s) mesure(s) lors de la réception d'un signal RF issu d'une étiquette RFID de véhicule 4, ou pour effectuer une mesure lorsqu'un signal RF est reçu. Le capteur communicant 6 peut également être réveillé et alimenté par les vibrations générées par le passage du véhicule au niveau du pylône de sorte que le capteur communicant 6 peut utiliser cette énergie pour réaliser les mesures et/ou pour envoyer les données associées à ces mesures effectuées vers l'étiquette RF de véhicule 4 du ou des véhicules 3 situés à portée.

Le capteur ou les capteurs utilisés dans le capteur communicant peuvent être une combinaison parmi un capteur de température, un capteur hygrométrique, un capteur de contraintes ou tout autre type de capteurs.

Une fois les données récupérées, l'étiquette RF de véhicule 4 est configurée pour sauvegarder les données dans une mémoire interne. Ainsi, le lecteur RF 19 pourra récupérer les mesures sauvegardées par l'étiquette RF de véhicule 4 lors de son passage au niveau de la gare de départ 7. Alternativement, le lecteur RF 19 peut aussi être situé dans une gare d'arrivée ou une gare intermédiaire de l'équipement de transport par câble 1. Ainsi, l'étiquette RF de véhicule 4 récupère les données du ou des capteurs communicants 6 lors de son déplacement sur l'équipement de transport par câble 1 et transmet les données récupérées à un lecteur RF 19 lorsque l'étiquette RF de véhicule 4 passe à proximité du lecteur RF 19, généralement dans l'une des gares de l'équipement.

Selon un autre mode de réalisation, l'étiquette RF de véhicule 4 est également configurée pour transmettre les données récupérées aux autres étiquettes RF de véhicule 4 situées à proximité, c'est-à-dire à portée de communication de l'étiquette RF de véhicule 4. La portée de communication des étiquettes RF de véhicule 4 est par exemple inférieure à 200 mètres. Les autres étiquettes RF de véhicule 4 situées à proximité sont par exemple les étiquettes RF de véhicule 4 du véhicule 3 précédent, du véhicule 3 suivant et du véhicule 3 circulant en sens inverse et situé à proximité du pylône 11. Cette transmission des données vers les autres étiquettes RF de véhicule 4 situées à portée permet d'une part de rapatrier les données plus rapidement vers le lecteur RF 19 situé au niveau de la gare de départ 7 et d'autre part de créer une redondance des données, ce qui permet d'éviter une perte des données.

De plus, le transfert des données entre étiquettes RF de véhicule 4 peut se faire de proche en proche de sorte que le temps nécessaire pour que lecteur RF 19 récupère les données associées aux mesures est fortement réduit par rapport au temps nécessaire pour le véhicule 3 ayant récupéré les données associées aux mesures du capteur pour revenir jusqu'à la gare où se trouve le lecteur RF 19.

Lors de son passage au niveau d'un pylône 11, l'étiquette RF de véhicule 4 récupère et transmet les données associées aux mesures effectuées aux autres étiquettes RF de véhicule 4 situées à portée. Les données transmises peuvent également comprendre d'autres informations que des mesures comme par exemple une alarme associée à un système défaillant ou à une mesure anormale, l'heure de la mesure, la référence du capteur...

Lorsque le véhicule 3 a passé le pylône 11, les vibrations cessent de sorte que lorsque la transmission des données est terminée, l'étiquette RF de véhicule 4 peut retourner dans un mode de veille. Le réveil suivant se faisant soit par la réception d'un signal RF, par exemple d'une autre étiquette RF de véhicule 4 ou du lecteur RF 19, ou par les vibrations engendrées au pylône 11 suivant, ou un autre événement réveillant l'étiquette RF.

Lorsqu'un véhicule 3 arrive à proximité du lecteur RF 19, c'est-à-dire au niveau de la gare de départ 7 dans le cas présent, le lecteur RF 19 envoie un signal RF à l'étiquette RF de véhicule 4 pour récupérer les données sauvegardées dans sa mémoire interne ou l'étiquette RF de véhicule 4 envoie d'elle-même les données sauvegardées vers le lecteur RF. Ces données correspondent aux mesures récupérées au niveau des pylônes 11 ainsi éventuellement que les mesures reçues des autres étiquettes RF de véhicule 4. Le lecteur RF 19 peut alors compiler l'ensemble des données de mesures et effectuer le traitement des données ou envoyer ces données à une station distante, par exemple via une connexion Internet. Le lecteur RF 19 peut également envoyer une commande à l'étiquette RF de véhicule 4, par exemple pour effacer les données mises en mémoire lorsque ces données ont été récupérées par le lecteur RF 19.

Dans l'exemple précédent, l'ensemble des véhicules 3 étaient équipés d'une étiquette RF de véhicule 4 mais l'invention peut également être réalisée avec seulement certains des véhicules 3 équipés d'étiquettes RF de véhicule 4.

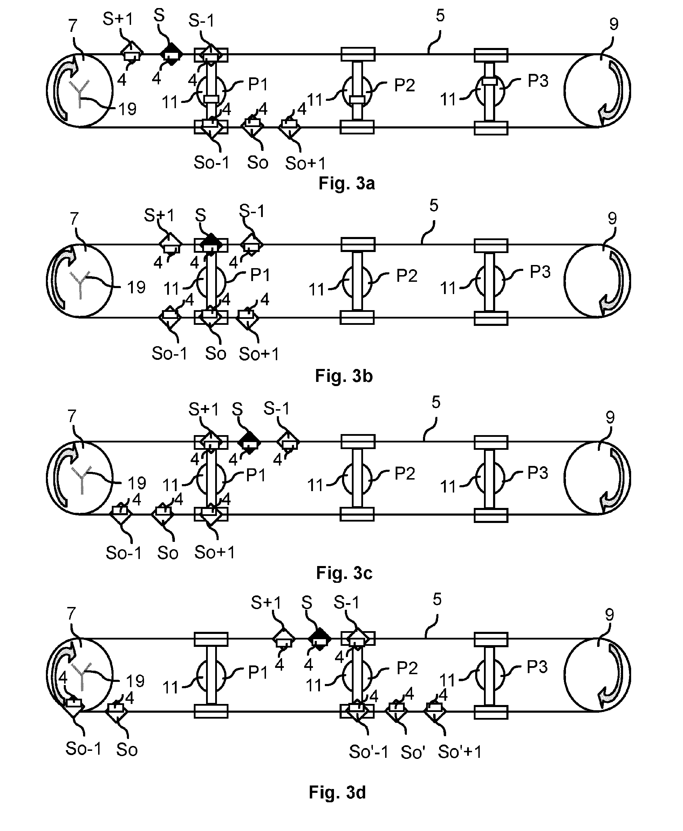

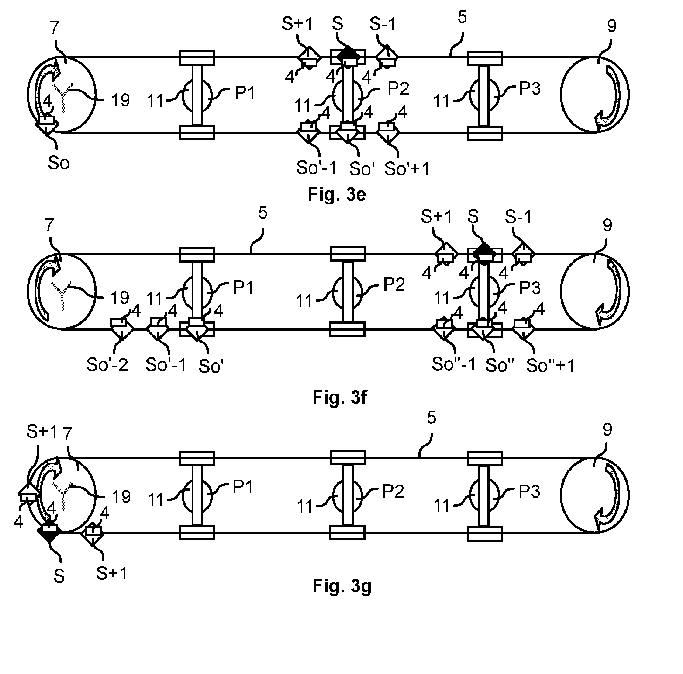

Afin de mieux comprendre la présente invention, un exemple de réalisation va maintenant être décrit à partir de la figure 3.
La figure 3 représente une vue de dessus d'un télésiège comprenant une gare de départ 7 comprenant un lecteur RF 19 et une gare d'arrivée 9 ainsi que trois pylônes intermédiaires 11 notés P1, P2 et P3. Seuls certains véhicules ou sièges 3 sont représentés par un losange. De plus, les sièges sont équipés chacun d'une étiquette RF de véhicule 4 couplée à une jauge de contrainte située sur un bras du siège pour mesurer les déformations de ce dernier. Par ailleurs, les trois pylônes 11 notés P1, et P2 et P3 sont équipés d'un capteur communicant 6 correspondant respectivement à un thermocouple, un hygromètre et un anémomètre. Le trajet d'un siège noté S et représenté par un losange noir tout au long du parcours de la station de départ jusqu'au retour à la gare de départ 7 va être décrit. Les autres véhicules 3 sont représentés par un losange blanc. Le siège précédent le siège S est noté S-1 et le siège suivant est noté S+1. De plus, à chaque passage du siège S au niveau d'un pylône 11, le siège situé de l'autre côté du pylône sera noté So pour le premier pylône P1, So' pour le deuxième pylône P2 et So" pour le troisième pylône P3. Les sièges précédant et suivant le siège So sont respectivement notés So-1 et So+1, les sièges précédant et suivant le siège So' sont respectivement notés So'-1 et So'+1 et les sièges précédant et suivant le siège So" sont respectivement notés So"-1 et So"+1.

Sur la figure 3a, le siège S approche du premier pylône noté P1 de sorte que le siège S-1 est au niveau du pylône P1. L'étiquette RF de véhicule 4 du siège S-1 est donc activée et alimentée par les vibrations engendrées par le passage du siège S-1 au niveau du pylône P1 de sorte que le siège S-1 peut envoyer des signaux vers l'étiquette du siège S, par exemple des données correspondant à des mesures récupérées par l'étiquette RFID de véhicule 4 du siège S-1. L'étiquette RFID de véhicule 4 du siège S est alors réveillée par ces signaux, ce qui lui permet par exemple de mettre en mémoire les données envoyées par l'étiquette RF 4 du siège S-1. Les données de mesure transférées entre les étiquettes RF de véhicule 4 comprennent par exemple la mesure effectuée, un identifiant du capteur ayant réalisé la mesure et l'heure à laquelle a été effectuée la mesure.

Sur la figure 3b, le siège S est au niveau du premier pylône noté P1 et l'étiquette RF de véhicule 4 associée au siège S est donc réveillée et alimentée par les vibrations engendrées par le passage du siège S au niveau du pylône P1. L'étiquette RF de véhicule 4 effectue donc une mesure de contraintes à l'aide de la jauge de contraintes associée et envoie un signal au capteur communicant 6 de température ou thermocouple positionné sur le pylône P1 pour récupérer les données associées à la mesure de température. Ces données sont alors mises en mémoire dans la mémoire interne de l'étiquette RF de véhicule 4 associée au siège S. Ces données sont également envoyées aux étiquettes RF de véhicule 4 associées aux sièges S-1, S+1 et So qui se trouvent à proximité du siège S. Ces données sont alors mises en mémoire par les différentes étiquettes RF de véhicule 4. Par ailleurs, les données reçues par l'étiquette RF de véhicule 4 du siège So peuvent éventuellement être renvoyées par l'étiquette RF de véhicule 4 du siège So vers les étiquettes RF de véhicule 4 des sièges So-1 et So+1. De plus, l'étiquette RF de véhicule 4 du siège S peut recevoir des données envoyées par l'étiquette du siège So, ces données sont alors mises en mémoire dans l'étiquette RF de véhicule 4 associée au siège S.

Sur la figure 3c, le siège S s'éloigne du premier pylône noté P1 et passe donc dans un mode de veille. Au même moment, le siège S+1 est au niveau du pylône P1. L'étiquette RF de véhicule 4 du siège S+1 est donc activée et alimentée par les vibrations engendrées par le passage du siège S+1 au niveau du pylône P1 de sorte que l'étiquette RF de véhicule 4 du siège S+1 peut envoyer des signaux vers l'étiquette RF de véhicule 4 du siège S, par exemple des données correspondant à des mesures récupérées par l'étiquette RF de véhicule 4 du siège S+1. L'étiquette RF de véhicule 4 du siège S est alors réveillée par ces signaux, ce qui lui permet par exemple de mettre en mémoire les données envoyées par l'étiquette RF de véhicule 4 du siège S+1.

Sur la figure 3d, le siège S approche du deuxième pylône noté P2 de sorte que le siège S-1 est au niveau du pylône P2. L'étiquette RF de véhicule 4 du siège S-1 est donc activée et alimentée par les vibrations engendrées par le passage du siège S-1 au niveau du pylône P2 de sorte que l'étiquette RF de véhicule 4 du siège S-1 peut envoyer des signaux vers l'étiquette RF de véhicule 4 du siège S, par exemple des données correspondant à des mesures récupérées par l'étiquette RF de véhicule 4 du siège S-1. L'étiquette RF de véhicule 4 du siège S est alors réveillée et activée par ces signaux, ce qui lui permet par exemple de mettre en mémoire les données envoyées par l'étiquette RF de véhicule 4 du siège S-1. De plus, le siège So s'approche de la station de départ 7 et le siège So-1 est au niveau de la station de départ 7 de sorte que les données récupérées par l'étiquette RF de véhicule 4 du siège S au niveau du pylône P1 peuvent déjà être récupérées par le lecteur RF 19 si elles ont été transférées à l'étiquette du siège So-1.

Sur la figure 3e, le siège S est au niveau du deuxième pylône 11 noté P2. L'étiquette RF de véhicule 4 du siège S est donc activée et alimentée par les vibrations engendrées par le passage du siège S au niveau du pylône P2 de sorte que l'étiquette RF de véhicule 4 du siège S peut effectuer une mesure de contraintes et récupérer des données associées à une mesure d'humidité du capteur communicant 6 comprenant l'hygromètre du pylône P2. Ces mesures peuvent alors être transmises vers les étiquettes RF de véhicule 4 des sièges So', S-1 et S+1. Une fois ces données récupérées, l'étiquette RF de véhicule 4 du siège S peut les mettre en mémoire et les envoyer vers les étiquettes RF de véhicule 4 des sièges S-1, S+1 et So', cette dernière pouvant renvoyer les mesures vers l'étiquette RF de véhicule 4 du siège So'-1. A cet instant, les données associées aux mesures faites au niveau du pylône P1 ont déjà été récupérées par le lecteur RF 19 par le biais de l'étiquette RF de véhicule 4 du siège So, voire du siège So-1 et peuvent donc être analysées.

Sur la figure 3f, le siège S est au niveau du troisième pylône noté P3. L'étiquette RF de véhicule 4 du siège S est donc activée et alimentée par les vibrations engendrées par le passage du siège S au niveau du pylône P3 de sorte que l'étiquette RF de véhicule 4 du siège S peut effectuer une mesure de contraintes et récupérer des données associées à une mesure de vitesse du capteur communicant 6 comprenant l'anémomètre du pylône P3. Ces données peuvent alors être transmises vers les étiquettes des sièges So", S-1 et S+1. Une fois ces données récupérées, l'étiquette RF de véhicule 4 du siège S peut les mettre en mémoire et les envoyer vers les étiquettes RF de véhicule 4 des sièges S-1, S+1 et So", cette dernière pouvant renvoyer les données vers l'étiquette RF de véhicule 4 du siège So"-l. A cet instant, les données associées aux mesures faites au niveau du pylône P2 sont transférées de l'étiquette RF de véhicule 4 du siège So'-1 vers l'étiquette RF de véhicule 4 du siège So'-2 au niveau du pylône P1 de sorte que lorsque le siège So'-2 arrive au niveau de la gare de départ 7, les données récupérées par l'étiquette RF de véhicule 4 du siège S au niveau du pylône P2 sont récupérées par le lecteur RF 19.

De la même manière, l'étiquette du siège S peut récupérer des données associées à des mesures au niveau des différents pylônes 11 lors de son trajet de la gare d'arrivée 9 à la gare de départ 7, les données étant également transférées aux étiquettes RF de véhicule 4 des sièges à portée.

Sur la figure 3g, le siège S arrive au niveau de la gare de départ 7 de sorte que le lecteur RF 19 peut récupérer les données sauvegardées dans la mémoire interne de l'étiquette RF de véhicule 4 et en particulier les données récupérées au niveau des différents pylônes 11 ainsi que les données récupérées des étiquettes RF de véhicule 4 des autres sièges.

Les modes de réalisation de la présente invention ne se limitent pas à l'exemple précédent de sorte que seuls certains véhicules ou sièges peuvent être équipés d'étiquettes RF de véhicule 4 et/ou de capteurs, que la portée des étiquettes RF de véhicule 4 peut s'étendre plus ou moins et donc atteindre plus ou moins de véhicules. Les étiquettes RF de véhicule 4 peuvent également comprendre une source d'énergie permanente, comme par exemple une cellule photovoltaïque ou un élément de stockage d'énergie tel qu'une batterie et ainsi rester en mode actif en permanence de sorte que les mesures effectuées sont transmises de proche en proche entre les étiquettes RF de véhicule 4 et arrivent en temps réel au niveau du lecteur RF 19. Par ailleurs, comme décrit précédemment, les capteurs communicants 6 peuvent être configurés pour être réveillés et pour récupérer l'énergie des vibrations générées par le passage des véhicules 3 au niveau du pylône 11. Dans ce cas, c'est le capteur communicant 6 lui-même qui envoie les données de mesure vers la ou les étiquettes RF de véhicule 4 des véhicules 3 situés à portée. Ces derniers n'ayant plus qu'à mettre les données en mémoire et/ou à transmettre les données vers les étiquettes RF de véhicule 4 des autres véhicules 3.

L'utilisation d'étiquettes RF de véhicule 4, par exemple des étiquettes RFID, permet de récupérer des données de mesure à partir de l'énergie récupérée à partir des vibrations. La pluralité d'étiquettes RF de véhicule 4 permet de transférer les données associées aux mesures des capteurs réparties sur l'équipement de transport par câble 1 vers le lecteur RF 19 distant des capteurs tout en utilisant des communications de faible portée, le transfert étant réalisé dans un délai relativement court. De plus, ces communications permettent de dupliquer les données transférées et donc de renforcer la fiabilité globale du système.

## Revendications

1. Equipement de transport par câble (1) comprenant au moins un véhicule (3) configuré pour se déplacer sur un parcours reliant une gare de départ (7) et une gare d'arrivée (9), dans lequel au moins un véhicule (3) comprend une étiquette radio-fréquence à identifiant unique (4), dite étiquette RF de véhicule, configurée pour récupérer et sauvegarder des données issues d'au moins un capteur de mesure communicant (6) situé sur l'équipement de transport par câble (1), ledit capteur communicant (6) présentant une unité de mesure couplée à une étiquette radio-fréquence à identifiant unique, dite étiquette RF de capteur, et dans lequel au moins une gare (7, 9) comprend un lecteur radio-fréquence (19) configuré pour récupérer les données sauvegardées par la, au moins une, étiquette RF de véhicule (4).

2. Equipement (1) selon la revendication 1 dans lequel le parcours comprend au moins un pylône (11) et le, au moins un, capteur communicant (6) est situé au niveau d'un pylône (11) et la au moins une, étiquette RF de véhicule (4) est configurée pour être réveillée et alimentée par les vibrations engendrées au passage d'un pylône (11).

3. Equipement (1) selon la revendication 1 dans lequel le parcours comprend au moins un pylône (11) et le, au moins un, capteur communicant (6) est situé au niveau d'un pylône (11) et la au moins une, étiquette RF de véhicule (4) est configurée pour être réveillée par les vibrations engendrées au passage d'un pylône et alimentée par une source d'énergie environnante.

4. Equipement (1) selon la revendication 3 dans lequel la source d'énergie environnante est une source d'énergie électromagnétique.

5. Equipement (1) selon la revendication 3 dans lequel la source d'énergie environnante est une source d'énergie thermique.

6. Equipement (1) selon l'une des revendications 2 à 5 dans lequel la, au moins une, étiquette RF de véhicule (4) est configurée pour retourner dans un mode de veille après le passage d'un pylône (11) par le véhicule (3).

7. Equipement (1) selon l'une des revendications précédentes dans lequel une pluralité de véhicules (3) comprend une étiquette RF de véhicule (4) et dans lequel ces étiquettes RF de véhicule (4) sont configurées pour transmettre les données récupérées aux autres étiquettes RF de véhicule (4) situées à portée, les données étant transmises d'une étiquette RF de véhicule (4) à l'autre jusqu'à un lecteur radio-fréquence (19) situé dans une gare (7, 9).

8. Equipement (1) selon la revendication 7 dans lequel les étiquettes RF de véhicules (4) sont configurées pour récupérer et transmettre les données grâce à la récupération de l'énergie environnante.

9. Equipement selon l'une des revendications précédentes dans lequel la portée des étiquettes d'identification radio-fréquence « RFID » de véhicule (4) est inférieure à 200m.

10. Equipement (1) selon l'une des revendications précédentes dans lequel les étiquettes d'identification radio-fréquence « RFID » de véhicules (4) comprennent des moyens de stockage d'énergie.

11. Equipement (1) selon l'une des revendications précédentes dans lequel le, au moins un, capteur communicant (6) est configuré pour être réveillé par les vibrations engendrées par le passage d'un véhicule (3) au niveau d'un pylône (11).

12. Equipement (1) selon la revendication 11 dans lequel le, au moins un, capteur communicant (6) est configuré pour être alimenté par une source d'énergie environnante.

13. Procédé de récupération des mesures réalisées sur un équipement de transport par câble (1) comprenant au moins un véhicule (3) configuré pour se déplacer sur un parcours comprenant au moins un pylône (11) et reliant une gare de départ (7) et une gare d'arrivée (9), au moins un véhicule (3) comprenant une étiquette radio-fréquence à identifiant unique (4), dite étiquette RF de véhicule, ledit procédé comprenant les étapes suivantes :
- on réalise au moins une mesure avec un capteur de mesure communicant (6) situé sur le parcours du, au moins un, véhicule, le capteur de mesure communicant comprenant une étiquette radio-fréquence à identifiant unique, dite étiquette RF de capteur,
- on récupère et on sauvegarde des données associées à la, au moins une, mesure au niveau d'une étiquette RF de véhicule (4) lors du passage d'un véhicule à proximité du capteur communicant (6),
- on récupère les données associées à la, au moins une, mesure au niveau d'un lecteur radio-fréquence (19) situé dans une gare (7, 9) via une étiquette RF de véhicule (4).

14. Procédé selon la revendication 13 dans lequel une pluralité de véhicules (3) comprend une étiquette RF de véhicule (4) et dans lequel, après la première étape de récupération, on transmet les données associées à la, au moins une, mesure à d'autres étiquettes RF de véhicule (4) situées à portée.

15. Procédé selon la revendication 14 dans lequel on transmet les données associées à la, au moins une, mesure d'une étiquette RF de véhicule (4) à l'autre jusqu'à la récupération des dites données au niveau du lecteur radio-fréquence (19).
